# EUROPEAN PATENT APPLICATION

(11) **EP 4 491 565 A1**
(43) Date of publication of application: **15.01.2025**
(21) Application number: 23185547.9
(22) Date of filing: 14.07.2023
(51) Int. Cl.: B66C 1/10, B66C 13/06

(54) **LIFTING APPARATUS FOR LIFTING A WIND TURBINE COMPONENT**

(71) Applicant: Siemens Gamesa Renewable Energy A/S, 7330 Brande (DK)
(72) Inventor: Moeller, Jesper, 7330 Brande (DK)
(74) Representative: SGRE-Association

(57) **Abstract**

A lifting apparatus (10, 11) for lifting a wind turbine component (94, 96, 98, 100) is provided that comprises: a support frame (12) comprising a support (14) to hold the wind turbine component (94, 96, 98, 100); one or more lifting points (16) on the support frame (12) configured to be coupled to a lifting wire (76) of a crane (70); and a stabilizing arrangement (18). The stabilizing arrangement (18) comprises: a first coupling point (20) configured to couple a first stabilizing line (30) to the support frame and a second coupling point (22) configured to couple a second stabilizing line (32) to the support frame, wherein the first coupling point (20) is arranged at a first end portion (34) of the support frame and the second coupling point (22) is arranged at a second end portion (36) of the support frame opposite to the first end portion (34); and at least one actuator (50-56) provided on the support frame, wherein the at least one actuator (50-56) is configured to actuate the first stabilizing line (30) and/or second stabilizing line (32) relative to the support frame to move the first and/or second end portion (34, 36) of the support frame in a vertical direction.

## Description

### FIELD OF THE INVENTION

The present invention relates to a lifting apparatus for lifting a wind turbine component, to a crane comprising such lifting apparatus, and to a method of using a lifting apparatus for lifting a wind turbine component.

### BACKGROUND

During assembly of a wind turbine, the components of the wind turbine are lifted by a crane. In particular, wind turbine blades are normally lifted by a crane while their longitudinal direction is oriented horizontally and the chord line (e.g., at a longitudinal position corresponding to the center of gravity) is oriented vertically. Due to this vertical orientation of the chord line, wind hits the suction side or the pressure side of the wind turbine blade perpendicularly. Since the part of the blade that extends towards the blade root is significantly shorter than the part of the blade that extends towards the blade tip, as seen from the center of gravity and the lifting point, a significant torque may be exerted about a vertical axis. To counteract such torque, the prior art suggests the use of a tagline system. However, as the size of the blades becomes larger, the torque may reach the limit that a crane boom can compensate via such tag line system. Thus, only short windows of low wind speeds are available for installation of such large blades.

For example, the document EP 2 526 042 B1 discloses a system for stabilizing a load during lifting by a crane. In particular, tag lines are connected to end portions of the load and to a winch, respectively. The winches may be provided at the bottom of the crane. By actuating the winches, the orientation of the load in a horizontal plane may be adjusted.

The inventors have found that to reduce the torque, the wind turbine blade may be lifted while being oriented with its chord line in a substantially horizontal orientation such that the wind no longer hits the suction side or pressure side of the wind turbine blade. Thus, the torque around a vertical axis generated by the wind hitting the blade is reduced. However, due to the aerodynamic shape of the wind turbine blade, movements due to lift generated by the wind turbine blade in a vertical direction may increase. These vertical movements increase with increasing wind speed. Such vertical movements may make it difficult to align the wind turbine blade, in particular a root end of the wind turbine blade, with an opening in a hub of a wind turbine rotor during assembly. Further, unsafe situations may arise during the assembly.

It is desirable to improve the efficiency and the safety during assembly of a wind turbine component, such as a wind turbine blade. It is particularly desirable to be able to mount larger blades during extended time windows, in particular at higher wind speeds.

### SUMMARY

Accordingly, there is a need to mitigate at least some of the drawbacks mentioned above and to improve the mounting of a wind turbine component.

This need is met by the features of the independent claims. The dependent claims describe embodiments of the invention.

According to an embodiment of the invention, a lifting apparatus for lifting a wind turbine component is provided. The lifting apparatus comprises a support frame comprising a support to hold the wind turbine component, one or more lifting points on the support frame configured to be coupled to a lifting wire of a crane, and a stabilizing arrangement. The stabilizing arrangement comprises a first coupling point configured to couple a first stabilizing line to the support frame and a second coupling point configured to couple a second stabilizing line to the support frame, wherein the first coupling point is arranged at a first end portion of the support frame and the second coupling point is arranged at a second end portion of the support frame opposite to the first end portion, and at least one actuator provided on the support frame. The at least one actuator is configured to actuate the first stabilizing line and/or the second stabilizing line relative to the support frame to move the first and/or second end portion of the support frame in a vertical direction.

The wind turbine component may for example be a wind turbine blade (rotor blade), a part of a wind turbine tower, a nacelle, or a hub for receiving the wind turbine blades.

The stabilizing arrangement may enable a stabilization of the support frame (and thus of the wind turbine component which is held by the support frame) in a vertical direction. In particular, the stabilizing arrangement may be configured to counteract a tilting/rolling movement of the support frame around a horizontal axis that is perpendicular to a longitudinal extension of the support frame.

This is in particular advantageous when the wind turbine component is lifted up by the lifting apparatus at high wind speeds (e.g., the lifting apparatus may allow a lifting operation at a wind speed of higher than 8, 10, 14, 16, 18, 20 or 22 m/s). Such high wind speeds can lead to high vertical movements of the wind turbine component and thus of the support frame that holds the wind turbine component. This applies in particular to large wind turbine components, such as large wind turbine blades, where large vertical movements may occur at high wind speeds. In particular, there is a risk of eigenfrequency oscillations leading to large vertical movements. The wind can create a tilting movement of the wind turbine component and thus of the support frame holding it.

The stabilizing arrangement and in particular the vertical movement of the first and/or second end portion by actuating the at least one actuator may generate a counter-moment that compensates/counteracts the tilting movement caused by aerodynamic forces applied to the load.

The stabilization arrangement may make the installation of wind turbine components more independent of the weather, since the assembly may also be carried out at higher wind speeds. This may lead to less standstill time/downtime compared to other conventional systems in which it has to be waited until the wind speed decreases before continuing/starting an assembly process.

Once the wind turbine component has been lifted to a final height for assembly, it may be stabilized in the vertical direction and/or aligned by the stabilizing arrangement with respect to the component to which the wind turbine component is to be connected. For example, a root end of a wind turbine blade can be aligned with an opening in a hub of a wind turbine.

The stabilizing arrangement may reduce the risk of damage during the assembly process and may improve the safety for workers. It also allows the wind turbine component to be aligned more easily and accurately, which results in a reduction of the assembly time.

The at least one actuator is provided on the support frame and thus close to the wind turbine component to be lifted. Therefore, the at least one actuator may react quickly to compensate vertical movements / tilt/roll movements (moments) of the support frame.

The first and/or second stabilizing lines may be provided from the crane and in particular from a top of the crane or from the ground.

Preferably, actuating the stabilizing line comprises selectively pulling in or pulling close the respective stabilizing line by the at least one actuator or giving out or reeling out the respective stabilizing line by the at least one actuator.

In case the at least one actuator is a cylinder, the stabilizing line may be selectively pulled closer to the cylinder by retraction of the cylinder or paid out by the cylinder by extension of the cylinder.

In case the at least one actuator is a winch, pulling in or pulling close may be performed by winding the stabilizing line onto the winch or at least by pulling the stabilizing line closer to the winch. Reeling out may be performed by unwinding the stabilizing line from the winch or at least by paying out the stabilizing line by the winch.

When the first stabilizing line is pulled in or close by the at least one actuator, the first end portion of the support frame (and thus the first coupling point) is moved in a positive vertical (i.e. upwards) direction. When the second stabilizing line is pulled in or close by the at least one actuator, the second end portion of the support frame (and thus the second coupling point) is moved in a positive vertical (i.e. upwards) direction.

When the first stabilizing line is given or reeled out by the at least one actuator, the first end portion of the support frame (and thus the first coupling point) is moved in a negative vertical direction (i.e. downwards) due to gravity. When the second stabilizing line is given or reeled by the at least one actuator, the second end portion of the support frame (and thus the second coupling point) is moved in a negative vertical (i.e. downwards) direction.

Wind forces may generate a tilt movement of the support frame in a vertical direction around a tilting axis of the support frame (i.e. vertical movement of the first and/or second end portion/coupling point). The tilting axis is an axis in a horizontal plane perpendicular to the longitudinal extension of the support frame/wind turbine component. Preferably, the tilting axis extends through the middle or substantially the middle of the longitudinal extension of the support frame.

By moving the first (or the second) end portion in a positive vertical direction and optionally the second (or the first) end portion in a negative vertical direction, a tilt movement on the support frame can be generated which can counteract or compensate a tilt movement caused by wind forces.

Preferably, the at least one actuator is configured to be coupled to the first stabilizing line and/or to the second stabilizing line.

The stabilizing arrangement may comprise one actuator configured to be connected to the first stabilizing line and another actuator configured to be connected to the second stabilizing line.

In another implementation the stabilizing arrangement may comprise only one actuator, wherein one end portion is configured to be coupled to the first stabilizing line and an opposite end portion is configured to be coupled to the second stabilizing line. For example the actuator is a winch on which a line/rope is wound, and one end of the line is connected to the first stabilizing line and the opposite end of the line is connected to the second stabilizing line.

Alternatively, both stabilizing lines may be connected, e.g. provided by a single line, which is wound in a loop around the spool of the single winch or gripped by another kind of actuator. Thus, when the winch rotates, the first stabilizing line is pulled and the second stabilizing line is released simultaneously (i.e. the first coupling point is moved in a positive vertical direction and the second coupling point is moved in a negative vertical direction) or vice versa.

Preferably, the support frame extends in a longitudinal direction to support the wind turbine component extending in the longitudinal direction, wherein the first end portion and second end portion are located on opposite ends in the longitudinal direction of the support frame.

During a lifting process, the support frame and thus the wind turbine component are extending in a horizontal or substantially horizontal direction (except vertical movement due to wind forces which are compensated by the stabilizing arrangement). For example, when the wind turbine component is a wind turbine blade, the blade may be lifted while being oriented with its chord line in a substantially horizontal orientation. Due to the horizontal orientation of the chord line of the blade during lifting, the wind no longer hits the suction side or pressure side of the wind turbine blade. Thus, the torque around a vertical axis generated by the wind hitting the blade may be reduced.

Preferably, the first and/or second coupling point is provided by a pulley that is arranged at the first and/or second end portion of the support frame and that guides the respective stabilizing line to the at least one actuator, or the first and/or second coupling point is provided on the at least one actuator. The at least one actuator may comprise a hydraulic or pneumatic cylinder and the first and/or second coupling point is provided on an end of the cylinder.

Preferably, the first and/or second coupling point is configured to receive the first and/or second stabilizing line in a direction having a vertical component.

The direction of the first and/or second stabilizing line may have a vertical component and a horizontal component, wherein the vertical component is larger than the horizontal component. For example, an angle of direction of the first and/or second stabilizing line to a vertical direction may be smaller than 45°, 30°, or 15°. Preferably the direction of the first and/or second stabilizing line may have only a vertical component, i.e. the coupling points receive the respective stabilizing lines a vertical or substantially vertical direction.

Preferably, the at least one actuator comprises a hydraulic or pneumatic cylinder configured to be connected to the respective stabilizing line, or a winch configured to be connected to the respective stabilizing line.

The winch may have a motor and a spool to reel in and out the respective stabilizing line. The winch may have a line/rope which is wound on the spool.

The at least one actuator may comprise a first winch connected to the first stabilizing line and a second winch connected to the second stabilizing line.

Alternatively, the stabilizing arrangement may comprise only one actuator such as a winch, wherein the stabilizing lines are provided as a single line which is wound on the winch or a rope/ line is wound onto the winch and one end of the line is configured to be connected to the first or second stabilizing line and a second end of the line is configured to be connected to the other stabilizing line. When the winch is rotated, the first and second stabilizing lines are actuated simultaneously, leading to movement of the first and second end portions of the support frame in opposite directions for compensating a tilt movement.

Preferably, the lifting apparatus further comprises a detection unit configured to detect movements of the support frame in a vertical and/or horizontal direction, and a controller configured to control, based on a detected signal of the detection unit, the at least one actuator. The detection unit may comprise an inclinometer and/or an accelerometer.

The controller may provide a feedback control for counteracting a vertical displacement(movement) at the first and/or second end portion (or coupling point) or a moment around a tilting axis of the support frame.

For example, when a tiling movement acts on the support frame in a clockwise direction (i.e. first end portion moves in a positive/upwards vertical direction and/or second end portion moves in a negative/downwards vertical direction), a counter movement in a counterclockwise direction can be generated by actuating the first and/or second stabilizing lines with the at least one actuator such that the first end portion moves in a negative/downwards vertical direction and/or the second end portion moves in a positive/upwards vertical direction.

When a tiling movement acts on the support frame in a counterclockwise direction (i.e. first end portion moves in a negative/downwards vertical direction and/or second end portion moves in a positive/upwards vertical direction), a counter movement in a clockwise direction can be generated by actuating the first and/or second stabilizing lines with the at least one actuator such that the first end portion moves in a positive/upwards vertical direction and/or the second end portion moves in a negative/downwards vertical direction.

Preferably, the lifting apparatus comprises at least two actuators, wherein each actuator is configured to be coupled to a different stabilizing line. For example two cylinders or two winches. The at least two actuators may be configured to be operated selectively separately or simultaneously. Therefore, it may be possible to only move one of the first and second end portions of the support frame in a vertical direction.

The at least one actuator may be configured to be operated selectively manually or automatically. Automatically may mean that based on the detected signal of the detection unit, the at least one actuator is operated. Manually may mean that a user can operate the at least one actuator manually for stabilizing the lifted wind turbine component in a vertical direction. In particular, the user may receive a detected signal of the detection unit and can then operate the at least one actuator manually based on the detected signal.

Preferably, the support frame is a C-yoke, wherein the support comprises a first C-shaped support member and a second C-shaped support member configured to support a wind turbine blade.

Each C-shaped support member may comprise a clamp member and means for displacing/moving the clamp members relative to the C-shaped support members such that the wind turbine blade is clamped in the C-yoke and in particular between the clamp members and the C-shaped support members.

Preferably, the C-yoke comprises a yoke member and the first C-shaped support member is connected to a first end portion of the yoke member and the second C-shaped support member is connected to a second end portion of the yoke member opposite to the first end portion.

Preferably, the support frame, and in particular the C-yoke is configured to support or hold the wind turbine blade during lifting with its longitudinal extension extending horizontally and while being oriented with its chord line in a (substantially) horizontal orientation. For example, the support may be configured such that the chord line of a blade profile with zero degree twist is oriented horizontally when the blade is being held by the support. Due to the horizontal orientation of the chord line of the blade during lifting, the wind no longer hits the suction side or pressure side of the wind turbine blade. Thus, the torque around a vertical axis generated by the wind hitting the blade may be reduced.

Preferably, the lifting apparatus comprises the first and second stabilizing lines.

The lifting apparatus may comprise a beam configured to be fixedly mounted on a boom of the crane, wherein a first guide and a second guide are provided on opposite end portions of the beam to guide the first stabilizing line and the second stabilizing line, respectively. The beam may be mounted at the top of the boom. For example, the beam may be fixedly mounted on the boom by welding or by screws. The first and/or second guide is preferably a pulley guiding the respective stabilizing line.

Preferably, the lifting apparatus comprises a first winch and a second winch configured to reel in and out the first stabilizing line and the second stabilizing line, respectively, during a lifting operation, wherein the first winch and the second winch are configured to be mounted on the crane or on a ground. The opposing end of the respective stabilizing lines can be connected to the at least one actuator at the support frame.

Preferably tension is kept on the first and second stabilizing lines via the first and second winches on the crane or the ground. Due to the tension kept on the stabilizing lines, stiff lines may be provided such that the at least one actuator can react quickly to compensate vertical movements and tilt movements (moments) of the support frame.

According to a further embodiment of the invention, a crane for lifting a wind turbine component is provided that comprises a boom, a lifting wire, the lifting apparatus according to any of the preceding claims, wherein the lifting wire is coupled to the one or more lifting points of the lifting apparatus, and a first stabilizing line and second stabilizing line both guided from an upper portion of the boom downwards towards the lifting apparatus. The first and second stabilizing lines are coupled at the first coupling point and the second coupling point, respectively, to the support frame and are actuatable by the at least one actuator.

Coupled to the one or more lifting points may mean that there may be further components between the lifting wire and the lifting point. For example, a crane hook is coupled to an end portion of the lifting wire, wherein the crane hook is coupled to a connection element which is connected to the lifting point(s), for example by ropes or wires. For example the lifting apparatus comprises four lifting points, one lifting point provided in each corner of the support frame. In this case one wire or rope may extend from the connection element to each lifting point.

The stabilizing lines are preferably guided downwards in a direction having a vertical component as defined further above.

According to a further embodiment of the invention, a method of lifting a wind turbine component using a lifting apparatus is provided. The lifting apparatus comprises a support frame comprising a support to hold the wind turbine component, one or more lifting points on the support frame configured to be coupled to a lifting wire of a crane, and a stabilizing arrangement, wherein the stabilizing arrangement comprises a first coupling point configured to couple a first stabilizing line to the support frame and a second coupling point configured to couple a second stabilizing line to the support frame, wherein the first coupling point is arranged at a first end portion of the support frame and the second coupling point is arranged at a second end portion of the support frame opposite to the first end portion, and at least one actuator provided on the support frame. The method comprises: actuating with the at least one actuator the first and/or second stabilizing line relative to the support frame to move the first and/or second end portion of the support frame, respectively, in a vertical direction.

By such method, a wind turbine component can be assembled that has advantages corresponding to those described further above. In particular, the efficiency and the safety during assembly of a wind turbine component, such as a wind turbine blade can be improved. In particular, larger blades may be mounted during extended time windows, in particular at higher wind speeds.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: is a schematic drawing showing a lifting apparatus for lifting a wind turbine component according to an embodiment.
- Fig. 2: is a detailed view of the drawing of Fig. 1.
- Fig. 3: is a schematic drawing showing a lifting apparatus for lifting a wind turbine component according to another embodiment.
- Fig. 4: is a detailed view of the drawing of Fig. 3.
- Fig. 5: is a first step of an assembly process of a wind turbine blade.
- Fig. 6: is a second step of an assembly process of a wind turbine blade.
- Fig. 7: is a third step of an assembly process of a wind turbine blade.
- Fig. 8: is a fourth step of an assembly process of a wind turbine blade.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

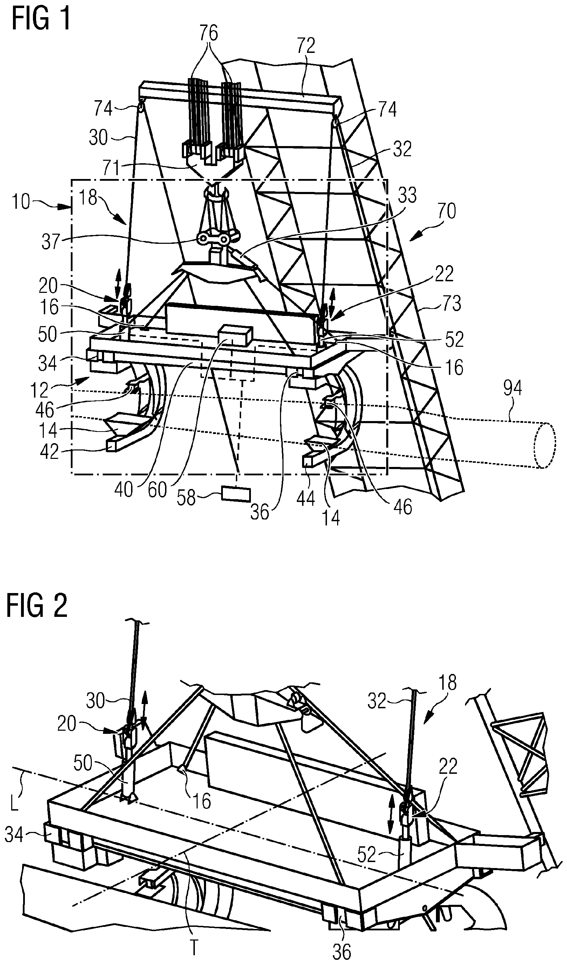

Fig. 1 is a schematic drawing showing a lifting apparatus 10 for lifting a wind turbine component, and in particular a wind turbine blade (rotor blade) 94, according to an embodiment and Fig. 2 is a detailed view of the drawing of Fig. 1.

The lifting apparatus 10 comprises a support frame 12 comprising a support 14 to hold the wind turbine blade 94, one or more lifting points 16 on the support frame 12 configured to be coupled to a lifting wire 76 of a crane 70, and a stabilizing arrangement 18.

The stabilizing arrangement 18 comprises a first coupling point 20 configured to couple a first stabilizing line 30 to the support frame 12 and a second coupling point 22 configured to couple a second stabilizing line 32 to the support frame 12. The first coupling point 20 is arranged at a first end portion 34 of the support frame and the second coupling point 22 is arranged at a second end portion 36 of the support frame opposite to the first end portion 34. Further, the stabilizing arrangement 18 of Figs. 1 and 2 comprises two actuators, namely a first cylinder 50 and a second cylinder 52, provided on the support frame 12. The cylinder 50, 52 may be a hydraulic or pneumatic cylinder. The cylinders 50, 52 are configured to actuate the first stabilizing line 30 and/or second stabilizing line 32 relative to the support frame to move the first and/or second end portion 34, 36 (and the first and/or second coupling point 20, 22) of the support frame in a vertical direction (vertical movement indicated by arrows in fig. 1 and 2). In particular, the first and second coupling point 20, 22 are provided on an end portion of the first and second cylinder 50, 52, respectively. During actuation of the respective cylinder 50, 52, the first or second stabilizing line is pulled close or is paid out selectively by the first or second cylinder 50, 52. Thus, by actuating the first and/or second cylinder 50, 52, vertical movements of the first and/or second end portions of the support frame 12 can be compensated or counteracted.

As shown in Fig. 1, the lifting apparatus 10 may further comprise a detection unit 60 configured to detect movements of the support frame 12 in a vertical and/or horizontal direction, and a controller 58 configured to control, based on a detected signal of the detection unit 60, the first and/or second cylinder 50, 52. The controller 58 is preferably in communication (wired or wireless communication) with the detection unit 60 and the first and second cylinders 50, 52. The detection unit 60 and/or the controller is/are preferably mounted on the support frame 12. The detection unit 60 may comprise an inclinometer. The controller 58 may provide a feedback control for counteracting a vertical displacement or moment around a tilting axis T of the support frame 12 at the first and/or second coupling point 22, 22. The tilting axis T is an axis in a horizontal plane perpendicular to the longitudinal axis L of the support frame.

As shown in Fig. 1, the support frame 12 is a C-yoke, wherein the support 14 comprises a first C-shaped support member 42 and a second C-shaped support member 44 configured to support the wind turbine blade 94. Each C-shaped support member 42, 44 may comprise a clamp member 46 and means (not shown) for displacing/moving the clamp members 46 relative to the C-shaped support members 42, 44 such that the wind turbine blade 94 is clamped in the C-yoke and in particular between the clamp members 46 and the C-shaped support members 42, 44.

The C-yoke may comprise a yoke member 40 and the first C-shaped support member 42 is connected to a first end portion of the yoke member and the second C-shaped support member 44 is connected to a second end portion of the yoke member opposite to the first end portion. The support frame 12 extends in a longitudinal direction (along a longitudinal axis L, see: Fig. 2) to support the wind turbine blade 94 extending in the longitudinal direction, wherein the first end portion 34 and second end portion 36 are located on opposite ends in the longitudinal direction of the support frame 12. As can be seen in Figs. 1 and 2, the support frame 12 is configured to hold the wind turbine blade 94 during lifting such that the longitudinal extension of the blade 94 extends horizontally while being oriented with its chord line in a substantially horizontal orientation such that the wind no longer hits the suction side or pressure side of the wind turbine blade. Thus, the torque around a vertical axis generated by the wind hitting the blade may be reduced.

As shown in Fig. 1, a crane 70 is provided that comprises the lifting apparatus 10 described above for lifting a wind turbine blade 94. The crane 70 comprises a boom 73 and the lifting wire 76, wherein the lifting wire 76 is coupled to the one or more lifting points 16 of the lifting apparatus 10. The crane further comprises the first stabilizing line 30 and the second stabilizing line 32 both guided from an upper portion of the boom 73 downwards towards the lifting apparatus 10. The first stabilizing line 30 is coupled to the first coupling point 20 and the second stabilizing line is coupled to the second coupling point 22 of the support frame 12 and are actuatable by the first and second cylinders 50, 52. Further, a beam 72 is provided which is fixedly mounted on the boom 73 of the crane 70 and in particular on an upper portion of the boom 73. The beam 72 may comprise a first guide 74 and a second guide 74 which are provided on opposite end portions of the beam 72 to guide the first stabilizing line 30 and the second stabilizing line 32, respectively. The guides 74 may comprise pulleys that guide lines 30, 32.

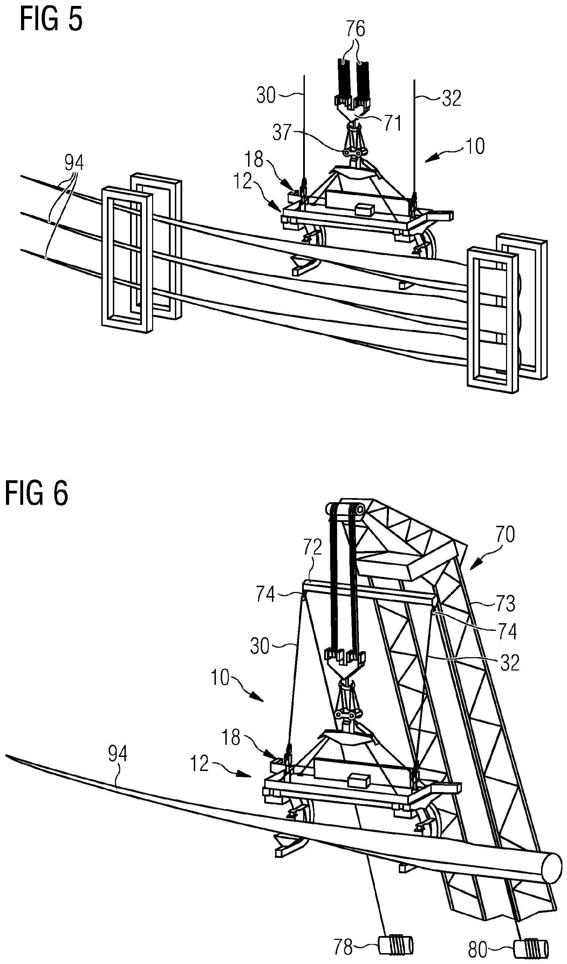

As exemplarily shown in Fig. 6, a first winch 78 and a second winch 80 configured to reel in and out the first stabilizing line 30 and the second stabilizing line 32, respectively, during a lifting operation, may be mounted on the crane 70 or a ground. One end of the first stabilizing wire 30 is connected to the first winch 78 or wound onto the first winch 78 and one end of the second stabilizing wire 32 is connected to the second winch 80 or wound onto the second winch 80. By operating winches 78, 80, the tension on lines 30, 32 may be kept constant. The long line between winches 78, 80 and the support frame however results in that a reaction by winches 78, 80 is not direct enough to provide compensation for tilting movements of the support frame. Since actuators 50, 52, 54 or 56 are directly mounted on the support frame, they can compensate such movements much more directly and faster.

As shown in Fig. 1, four lifting points 16 are provided in each corner of the support frame 12. The lifting apparatus 10 may comprise a connection element 37 which is configured to be coupled to each of the lifting points 16 via ropes or wires. The connection element 37 is configured to be coupled to a crane hook 71 which is coupled to the lifting wire 76 (e.g., via a lifting block). The connection element 37 may be directly connected to the crane hook 71 or may be coupled to the crane hook 71 via ropes or wires.

The connection element 37 may comprise a cylinder 33, preferably pneumatic or hydraulic, which is configured to tilt an upper portion of the connection element 37 relative to a lower portion of the connection element 37, in particular in a vertical plane extending in the longitudinal direction of the support frame 12. Due to the cylinder 33, the support frame 12 can be tilted.

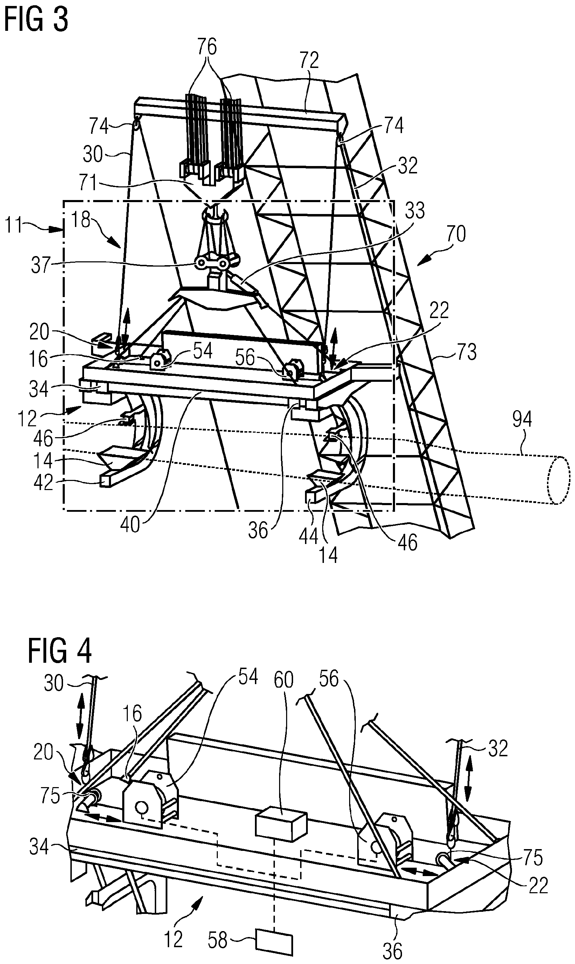

Fig. 3 is a schematic drawing showing a lifting apparatus 11 for lifting a wind turbine component and in particular the wind turbine blade 94, according to another embodiment and Fig. 4 is a detailed view of the drawing of Fig. 3.

The lifting apparatus 11 shown in Figs. 3 and 4 is similar to the lifting apparatus 10 shown in Figs. 1 and 2. Thus, in the following, only the differences are described. All other features described with respect to the lifting apparatus 10 of Figs. 1 and 2 are also applicable to the lifting apparatus 11 of Figs. 1 and 2. The features regarding the crane 70 are also applicable.

Instead of cylinders 50, 52 (see Figs. 1 and 2), the lifting apparatus 11 shown in Figs. 3 and 4 comprises two actuators, namely a first winch 54 and a second winch 56, which are provided on the support frame 12. In particular, the first coupling point 20 is provided by a pulley 75 that is arranged at the first end portion 34 of the support frame 12. The second coupling point 22 is provided by another pulley 75 that is arranged at the second end portion 36 of the support frame 12. The pulley 75 at the first end portion 34 guides the first stabilizing line 30 to the first winch 54 and the pulley 75 at the second end portion 36 guides the second stabilizing line 32 to the second winch 56. By pulling in or giving out the first stabilizing line 30 by the first winch 54, the first end portion 34 can be moved in an upwards or downwards vertical direction. By pulling in or giving out the second stabilizing line 32 by the second winch 56, the second end portion 36 can be moved in an upwards or downwards vertical direction. Alternatively, lines 30, 32 may be connected and only one winch may be provided.

With respect to Figs. 5 to 8, a lifting and an assembly process of the wind turbine blade 94 is described in the following. As an example, the crane 70 to which the lifting apparatus 10 (with the cylinders) is coupled is shown in the Figures. However, the following is also applicable to the lifting apparatus 11 (with the winches).

A wind turbine 90 is provided that comprises a wind turbine tower 98, a nacelle 100 mounted at the top of the wind turbine tower 98 and a wind turbine rotor 92 having a hub 96 with openings for receiving wind turbine blades 94. The hub 96 is rotatably coupled to the nacelle 100 and in particular to a generator (not shown) within the nacelle.

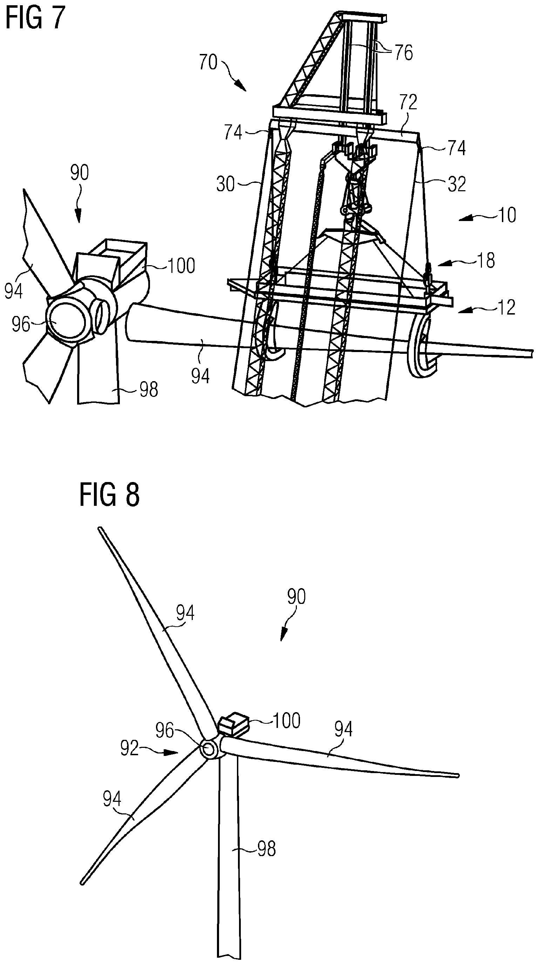

A wind turbine blade 94 is picked up by the lifting apparatus 10 coupled to the crane 70 as described above (see Fig. 5). In particular, the wind turbine blade 94 is clamped between the clamp members 46 and the first and second C-shaped support member 42, 44, wherein the blade 94 is oriented horizontally. The wind turbine blade 94 is then lifted up to the desired assembly position (see Fig. 6). During the lifting process the stabilizing arrangement 18 (see Fig. 1) can be used for counteracting tilt movements. Further, in the desired assembly position, the stabilizing arrangement can be used for aligning a root end of the wind turbine blade with an opening of the hub 96 (see Fig. 7). When the wind turbine blade 94 is connected to the hub 96, the wind turbine blade 94 is released from the support frame 12 and the assembly process is finished. Due to the stabilizing arrangement, the whole assembly process is more efficient, more accurate and safer. In particular, root end movement of the blade in vertical direction can be reduced significantly. The assembly of the wind turbine blade 94 may be carried out at high wind speeds which is not possible with conventional systems. Thus, the whole assembly process of a wind turbine 90 is accelerated as the downtimes due to bad weather are reduced.

## Claims

1. A lifting apparatus (10, 11) for lifting a wind turbine component (94, 96, 98, 100), comprising:
- a support frame (12) comprising a support (14) to hold the wind turbine component (94, 96, 98, 100);
- one or more lifting points (16) on the support frame (12) configured to be coupled to a lifting wire (76) of a crane (70); and
- a stabilizing arrangement (18),
wherein the stabilizing arrangement (18) comprises
- a first coupling point (20) configured to couple a first stabilizing line (30) to the support frame and a second coupling point (22) configured to couple a second stabilizing line (32) to the support frame, wherein the first coupling point (20) is arranged at a first end portion (34) of the support frame and the second coupling point (22) is arranged at a second end portion (36) of the support frame opposite to the first end portion (34); and
- at least one actuator (50-56) provided on the support frame, wherein the at least one actuator (50-56) is configured to actuate the first stabilizing line (30) and/or the second stabilizing line (32) relative to the support frame to move the first and/or second end portion (34, 36) of the support frame in a vertical direction.

2. The lifting apparatus of claim 1, wherein actuating the stabilizing line comprises selectively pulling in or pulling close the respective stabilizing line (30, 32) by the at least one actuator (50-56) or giving out or reeling out the respective stabilizing line by the at least one actuator (50-56) .

3. The lifting apparatus of claim 1 or 2, wherein the actuator (50-56) is configured to be coupled to the first stabilizing line (30) and/or to the second stabilizing line (32).

4. The lifting apparatus of claim 1, 2 or 3, wherein the support frame (12) extends in a longitudinal direction (L) to support the wind turbine component (94, 96, 98, 100) extending in the longitudinal direction (L), and wherein the first end portion (34) and the second end portion (36) are located on opposite ends in the longitudinal direction (L) of the support frame (12).

5. The lifting apparatus of any of the preceding claims, wherein the first and/or second coupling point (20, 22) is provided by a pulley (75) that is arranged at the first and/or second end portion (34, 36) of the support frame and that guides the respective stabilizing line to the at least one actuator (50-56), or
wherein the first and/or second coupling point (20, 22) is provided on the at least one actuator (50-56).

6. The lifting apparatus of any of the preceding claims, wherein the first and/or second coupling point (20, 22) is configured to receive the first and/or second stabilizing line (30, 32) in a direction having a vertical component.

7. The lifting apparatus of any of the preceding claims, wherein the at least one actuator (50-56) comprises a hydraulic or pneumatic cylinder (50, 52) configured to be connected to the respective stabilizing line, or a winch (54, 56) configured to be connected to the respective stabilizing line.

8. The lifting apparatus of any of the preceding claims, further comprising a detection unit (60) configured to detect movements of the support frame (12) in a vertical and/or horizontal direction, and a controller (58) configured to control, based on a detected signal of the detection unit (60), the at least one actuator (50-56), and
wherein preferably, the detection unit (60) comprises an inclinometer and/or an accelerometer.

9. The lifting apparatus of claim 8, wherein the controller (58) provides a feedback control for counteracting a vertical displacement at the first and/or second coupling point (22, 22) or a moment around a tilting axis (T) of the support frame (12).

10. The lifting apparatus of any of the preceding claims, wherein the support frame (12) is a C-yoke, and wherein the support comprises a first C-shaped support member (42) and a second C-shaped support member (44) configured to support a wind turbine blade (94).

11. The lifting apparatus of any of the preceding claims, wherein the lifting apparatus (10, 11) comprises the first and second stabilizing lines (30, 32).

12. The lifting apparatus of any of the preceding claims, wherein the lifting apparatus (10, 11) comprises a beam (72) configured to be fixedly mounted on a boom (73) of the crane (70), wherein a first guide (74) and a second guide (74) are provided on opposite end portions of the beam (72) to guide the first stabilizing line (30) and the second stabilizing line (32), respectively.

13. The lifting apparatus of any of the preceding claims, comprising a first winch (78) and a second winch (80) configured to reel in and out the first stabilizing line and the second stabilizing line, respectively, during a lifting operation, wherein the first winch (78) and the second winch (80) are configured to be mounted on the crane or on a ground.

14. A crane (70) for lifting a wind turbine component (94, 96, 98, 100), comprising:
- a boom (73);
- a lifting wire (76);
- the lifting apparatus (10, 11) according to any of the preceding claims, wherein the lifting wire (76) is coupled to the one or more lifting points (16) of the lifting apparatus; and
- a first stabilizing line (30) and a second stabilizing line (32) both guided from an upper portion of the boom (73) downwards towards the lifting apparatus (10, 11), wherein the first and second stabilizing lines (30, 32) are coupled at the first coupling point (20) and the second coupling point (22), respectively, to the support frame (12) and are actuatable by the at least one actuator (50-56).

15. A method of lifting a wind turbine component (94, 96, 98, 100) using a lifting apparatus (10, 11), wherein the lifting apparatus comprising a support frame (12) comprising a support (14) to hold the wind turbine component, one or more lifting points (16) on the support frame configured to be coupled to a lifting wire (76) of a crane (70), and a stabilizing arrangement (18), wherein the stabilizing arrangement (18) comprises a first coupling point (20) configured to couple a first stabilizing line (30) to the support frame and a second coupling point (22) configured to couple a second stabilizing line (32) to the support frame, wherein the first coupling point (20) is arranged at a first end portion (34) of the support frame and the second coupling point (22) is arranged at a second end portion (36) of the support frame opposite to the first end portion, and at least one actuator (50-56) provided on the support frame (12),
wherein the method comprises:
actuating with the at least one actuator (50-56) the first and/or second stabilizing line (30, 32) relative to the support frame (12) to move the first and/or second end portion (34, 36) of the support frame, respectively, in a vertical direction.
